# FASCICULE DE BREVET EUROPEEN

(11) **EP 2 402 099 B1**
(45) Date de publication et mention de la délivrance du brevet: **19.03.2014**
(21) Numéro de dépôt: 11171276.6
(22) Date de dépôt: 24.06.2011
(51) Int. Cl.: B23D 11/00, B23Q 5/027

(54) **Unité de mortaisage comportant un outil de mortaisage oscillant**
Stoßeinheit, die ein schwingendes Stoßwerkzeug umfasst
Slotting unit comprising an oscillating slotting tool

(30) Priorité: 02.07.2010 FR 1055375
(43) Date de publication de la demande: 04.01.2012
(73) Titulaire: AP2R, 61800 Saint-Pierre-d'Entremont (FR)
(72) Inventeur: Pillu, Serge, 61220 LA COULONCHE (FR); Rapeaud, Olivier, 50350 DONVILLE LES BAINS (FR)
(74) Mandataire: Zimmermann, Alain

(56) Documents cités:
- DE-B3-102006 026 261
- US-A- 2 694 962

## Description

La présente invention concerne une unité de mortaisage perfectionnée transformant un mouvement de rotation d'un arbre d'entrée en un mouvement de translation alternatif d'un outil de mortaisage.

Dans un tel type d'unité, l'outil de mortaisage, tel qu'une plaquette en carbure de tungstène ou autre matériau dur et résistant, est utilisé par exemple pour réaliser des rainures dans/autour d'une pièce à usiner, ou du filetage.

De manière générale, l'outil suit un mouvement alternatif suivant un cycle carré ou rectangulaire, c'est-à-dire qu'il avance en retirant un copeau de matière, il s'écarte de la surface de la pièce une fois le point d'usinage de fin de course atteint, il recule parallèlement à son mouvement d'avance, puis il redescend avant de débuter un nouveau cycle d'usinage, et ainsi de suite. Une telle unité de mortaisage/rainurage est décrite en particulier dans EP 1 658 154.

Cependant, ce mouvement n'est pas optimisé et engendre souvent des problèmes d'état de surface, de précision d'usinage, de fiabilité (coûteuse en terme de service après vente), de casse d'outils, et rend la conception de l'unité de mortaisage complexe (surdimensionnement des épaisseurs et des roulements pour des questions de renforcement de la structure, problèmes d'étanchéité).

Un exemple d'une unité de mortaisage selon le préambule de la revendication 1 est divulgué dans US 2 694 962 A.

Un but de la présente invention est donc de résoudre les problèmes cités précédemment, à l'aide d'une solution compacte, efficace (qualité, état de surface, moins de rebus), productive et fiable.

Ainsi, la présente invention a pour objet une unité de mortaisage comprenant les caractéristiques de la revendication 1, transformant un mouvement de rotation d'un arbre d'entrée en un mouvement de translation alternatif d'un outil de mortaisage, comprenant:
- une première partie de carter comportant au moins un arbre d'entrée rotatif,
- une seconde partie de carter adjacente à la première partie comportant au moins un coulisseau pour au moins un outil de mortaisage muni d'une extrémité de travail,
- des moyens pour transformer le mouvement de rotation de l'arbre d'entrée en un mouvement de translation alternatif de l'outil de mortaisage suivant un cycle d'avance pour le retrait de la matière, de remontée de dégagement, de recul et de redescente, avant de redémarrer un nouveau cycle,
- où l'outil de mortaisage est monté oscillant autour d'un axe de rotation de sorte que, au moins lors de la phase de remontée de dégagement, ledit outil de mortaisage, en particulier l'extrémité de travail, pivote autour dudit axe.
- où l'axe de rotation est situé sur la première partie de carter comportant l'arbre d'entrée ;
- où l'ensemble de la seconde partie de carter est monté oscillante par rapport à la première partie de carter autour de l'axe de rotation ; et
- où la première partie de carter renferme des moyens de pivotement comportant:
   * une came de pivotement solidaire de l'arbre d'entrée avec lequel elle tourne axialement,
   * un coulisseau, prenant appui contre la came par l'intermédiaire d'un premier galet
   * une glissière recevant le coulisseau pour le déplacement de ce dernier en translation perpendiculairement à l'arbre d'entrée,
   * un deuxième galet monté mobile en rotation à l'intérieur du coulisseau,
   * une rampe sur laquelle le deuxième galet se déplace alternativement et de manière synchronisée avec le mouvement de rotation de la came, la rampe comportant une protubérance suivie, en direction de l'arbre d'entrée, d'une pente, de sorte que, lorsque le deuxième galet est sur le sommet de la protubérance, l'outil de mortaisage est dans sa position de travail et, lorsque le deuxième galet se déplace le long de la pente, la seconde partie de carter, et donc l'outil, pivote autour de l'axe, et
   * un ressort de rappel appuyant sur le coulisseau pour ramener ce dernier contre la came ;

Selon des modes de réalisation préférés, l'unité conforme à la présente invention comprend l'une au moins des caractéristiques suivantes:
- les moyens de pivotement comportent également des galets latéraux de guidage disposés de part et d'autre du coulisseau et reposant sur des pistes solidaires de la première partie de carter ;
- l'axe de rotation et les moyens de pivotement sont disposés de part et d'autre de l'arbre d'entrée, ledit axe de rotation étant perpendiculaire audit arbre ;
- des ressorts de rappel élastique sont prévus entre les deux parties de carter pour les ramener à leur position initiale après pivotement pour maintenir le contact du deuxième galet sur la rampe ;
- les moyens de transformation du mouvement de rotation de l'arbre d'entrée en mouvement de translation de l'outil de mortaisage comportent:
   * une bielle reliée au porte outil,
   * un vilebrequin relié à l'arbre d'entrée,
   * un maneton reliant la bielle au vilebrequin, et
   * un coulisseau porte outil relié à la bielle ;
- la came de pivotement et le vilebrequin sont synchronisées ;
- la distance/hauteur de dégagement par rapport à la pièce usinée entre la position de travail et la position pivoté de l'outil de mortaisage, ou dépincé, est de l'ordre 0 à 2 mm à l'extrémité de l'outil de mortaisage ;
- l'accouplement entre l'arbre d'entrée et l'outil de mortaisage comporte un jeu de billes monté dans une cage entourant ledit arbre et mobile en translation le long de l'axe de l'arbre afin de permettre un débattement axial et angulaire de quelques millimètres/degrés dudit arbre lors de la rotation de l'outil de mortaisage ; et
- des joints d'étanchéité sont prévus entre les première et seconde parties de carter (pour protéger de l'introduction de copeaux ou liquide de coupe dans les carters).

L'invention va maintenant être décrite plus en détail en référence à des modes de réalisation particuliers donnés à titre d'illustration uniquement et représentés sur les figures annexées dans lesquelles:
- La figure 1 est une vue en perspective de l'unité conforme à la présente invention ;
- La figure 2 est une en perspective partiellement ouverte de l'unité ;
- La figure 3 est une vue en coupe en perspective de la figure 1 ; et
- Les figure 4 à et 7 sont des vues en coupe de l'unité dans différentes positions illustrant différentes phases d'usinage.

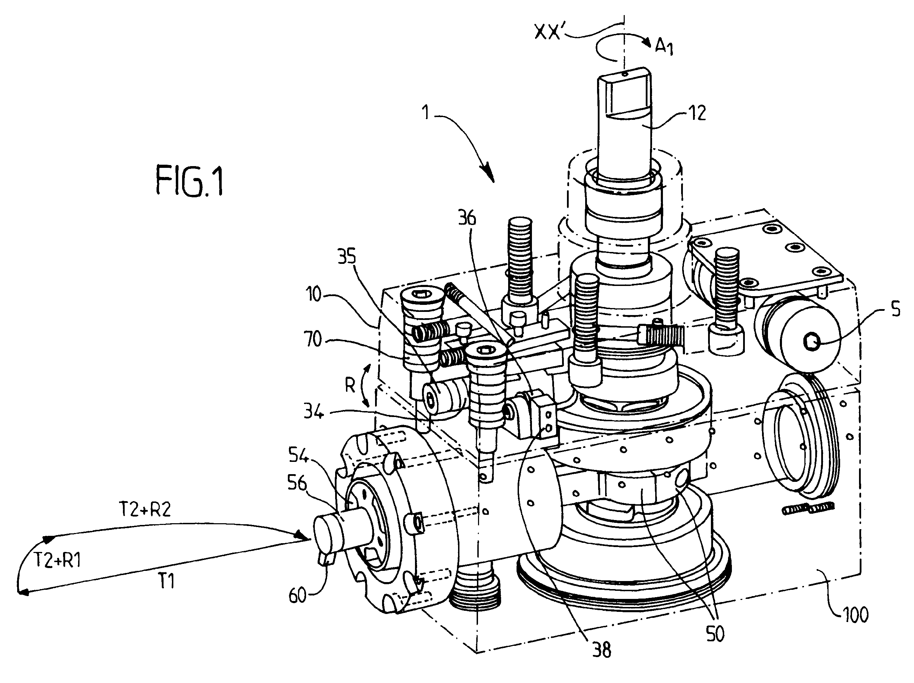

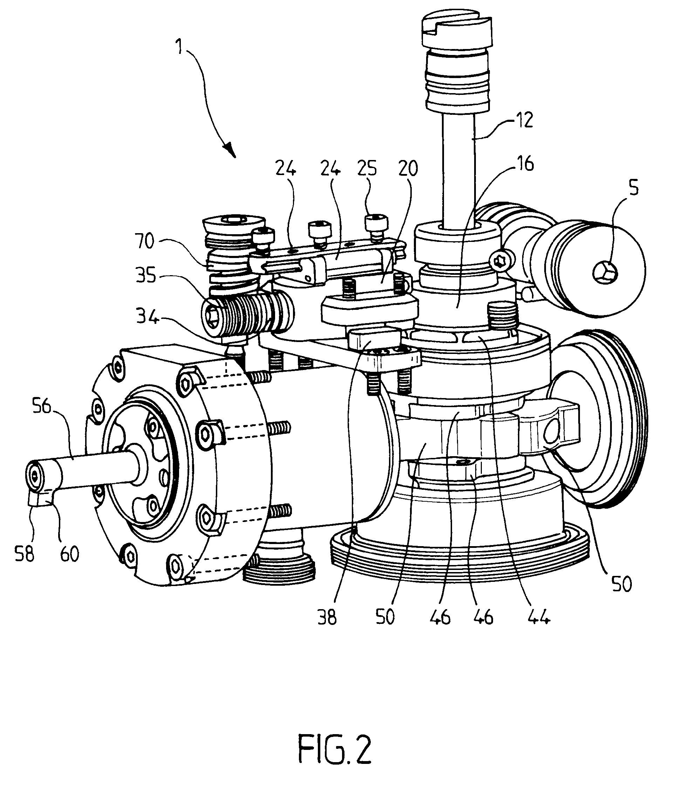

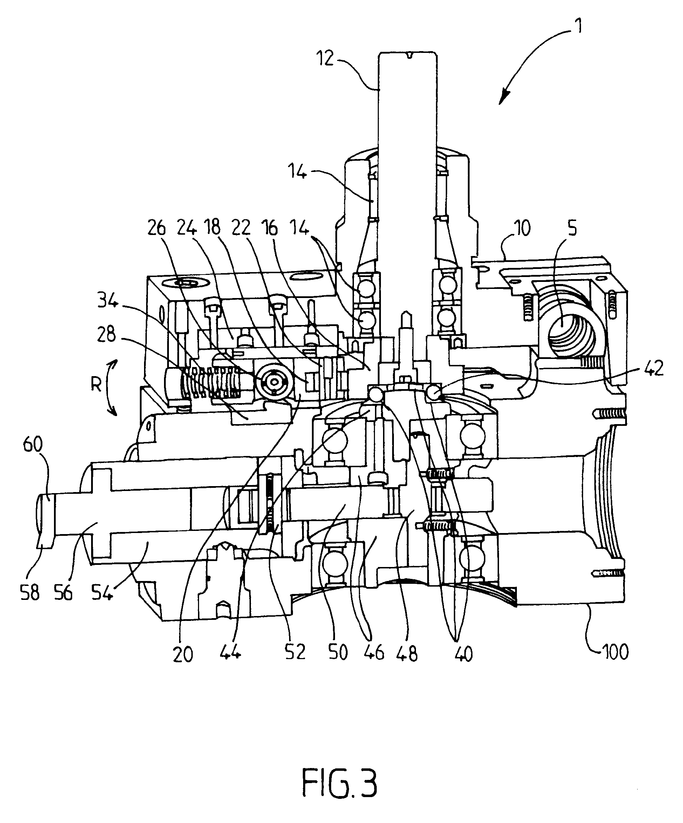

Les figures 1 à 7 représentent une unité de mortaisage 1 conformément à la présente invention.

Cette unité 1 comporte une première partie de carter 10 montée de manière fixe et une seconde partie de carter 100 mobile en rotation (flèche R) par rapport à la première partie de carter 10 autour d'un axe de pivotement 5.

La première partie de carter 10 renferme un arbre d'entrée 12 mis en rotation par tout système, par exemple un moteur extérieur (non représenté) d'une tourelle de tour.

L'arbre 12 traverse la première partie de carter 10 et tourne sur son axe de rotation/de symétrie XX' grâce à plusieurs roulements à billes et/ou à aiguilles 14.

Une came de pivotement 16 est montée autour d'une extrémité de l'arbre 12, solidairement avec ce dernier. Cette came 16 comporte une forme sensiblement ovale dont la périphérie définit une piste de glissement continue pour un premier galet rotatif 18.

Le premier galet rotatif 18 est solidaire d'un coulisseau 20 par l'intermédiaire d'un axe 22 parallèle à l'arbre d'entrée 12. Le coulisseau 20 est monté mobile en translation, perpendiculairement à l'arbre d'entrée 12, dans une glissière 24 en deux parties et fixée à la première partie de carter 10 à l'aide par exemple de vis 25. Le coulisseau 20 renferme un deuxième galet 26 d'axe de rotation perpendiculaire à celui du premier galet 18 et adapté pour se déplacer en translation sur une rampe 28 solidaire de la seconde partie de carter 100.

Plus précisément, la rampe 28 comporte une protubérance 30 suivie, en direction de l'arbre d'entrée 12, d'une pente 32, de sorte que, lorsque le deuxième galet 26 est sur le sommet de la protubérance 30, l'unité de mortaisage 1 est dans une première position et, lorsque le deuxième galet 26 se déplace le long de la pente 32, la seconde partie de carter 100 pivote autour de l'axe 5, comme cela sera décrit ultérieurement.

Un ressort de compression 34 prend appui contre une tête de vis 35 fixée dans un orifice taraudé de la première partie de carter 10. Ce ressort 34 appuie en permanence sur le coulisseau 20 et permet de plaquer de manière continue le premier galet 18 contre la came de pivotement 16 durant tout le mouvement de rotation de celle-ci.

Des galets de guidage latéral 36 sont également prévus pour permettre une bonne articulation des deux parties de carter 10 et 100 entre elles et pour maintenir le coulisseau 20 en position durant son mouvement de translation. Ces galets de guidage latéral 36 reposent sur des pistes 38 solidaires de la première partie de carter pour éviter le jeu latéral entre les deux parties de carter lors de la rotation.

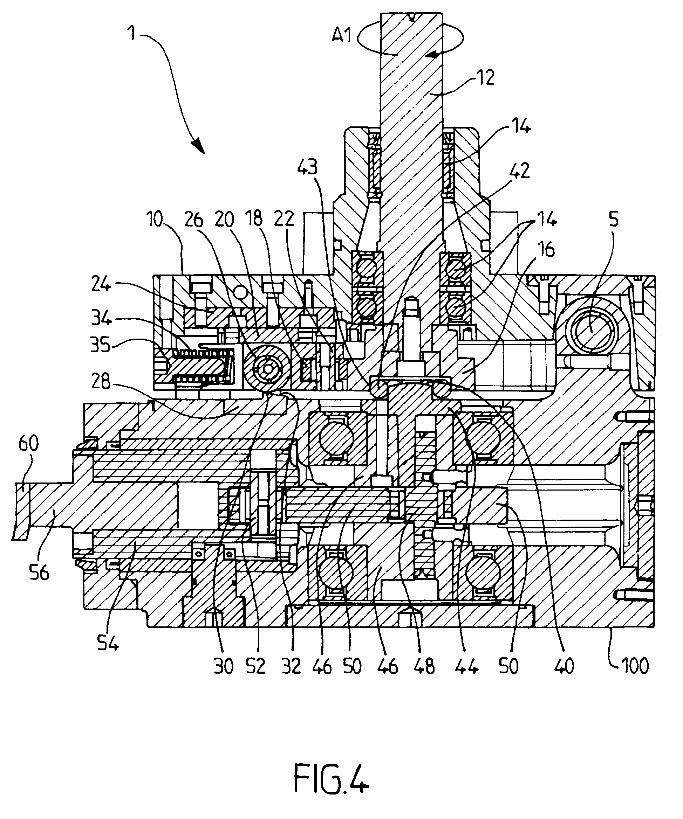

Comme cela est visible sur les figures 4 à 7, l'arbre d'entrée 12 se prolonge par un accouplement à billes 40 comportant des billes 42 tournant dans une cage interne 43 de la came de pivotement 16. La rotation de l'arbre d'entrée 12 et de la came de pivotement 16 entraîne en rotation une rotule 44 solidaire d'un vilebrequin 46. Le vilebrequin 46 porte, au niveau d'un maneton 48, une bielle 50 comportant deux parties vissées entre elles.

La bielle 50 entoure localement un axe 52, parallèle à l'arbre d'entrée 12, en prise avec un coulisseau porte outil 54. Pour finir, un porte outil 56 est vissé sur le coulisseau 54 et porte à son extrémité de travail un outil de mortaisage 60 au profil déterminé, tel qu'une plaquette en carbure de tungstène ou autre matériau habituellement utilisé pour les outils de coupe munie d'une extrémité de coupe 58.

La chaine cinématique et le fonctionnement de cette unité de mortaisage 1 conforme à l'invention sont les suivants:

L'arbre d'entrée 12 est mis en rotation (flèche A1) par exemple par l'intermédiaire d'un moteur (non représenté). En tournant axialement grâce aux roulements à billes et/ou à aiguilles 14, l'arbre 12 entraîne la came de pivotement 16 en rotation dans le même sens. Cette came de pivotement 16 frotte alors extérieurement sur le premier galet 18. En raison de la forme non cylindrique de la périphérie de la came 16, cette dernière déplace le coulisseau 20 alternativement linéairement (droite à gauche sur les dessins) dans la glissière 24, perpendiculairement à l'axe de l'arbre d'entrée 12.

Ce déplacement alternatif du coulisseau 20 dans la glissière 24 est effectué à l'encontre de la force de rappel du ressort de compression 34 qui plaque constamment le premier galet 18 contre la came 16.

Le deuxième galet 26 étant lié au coulisseau 20, il se déplace également alternativement linéairement en roulant le long de la rampe 28. Dans une première position de la came 16, le deuxième galet 26 est positionné sur le sommet de la protubérance 30 de la rampe 28. Dans cette position, les deux carters 10 et 100 sont éloignés (figure 4 puis 5). A mesure que la came 16 tourne, le premier galet 18 se déplace en direction de l'arbre d'entrée 12 en restant constamment au contact du profil extérieur de la came 16 grâce au ressort 34. Cela provoque, comme vu précédemment, le déplacement linéaire du coulisseau 20 en direction de l'arbre d'entrée 12, qui engendre à son tour le déplacement du deuxième galet 26 dans la même direction, le long de la pente 32 de la rampe 28.

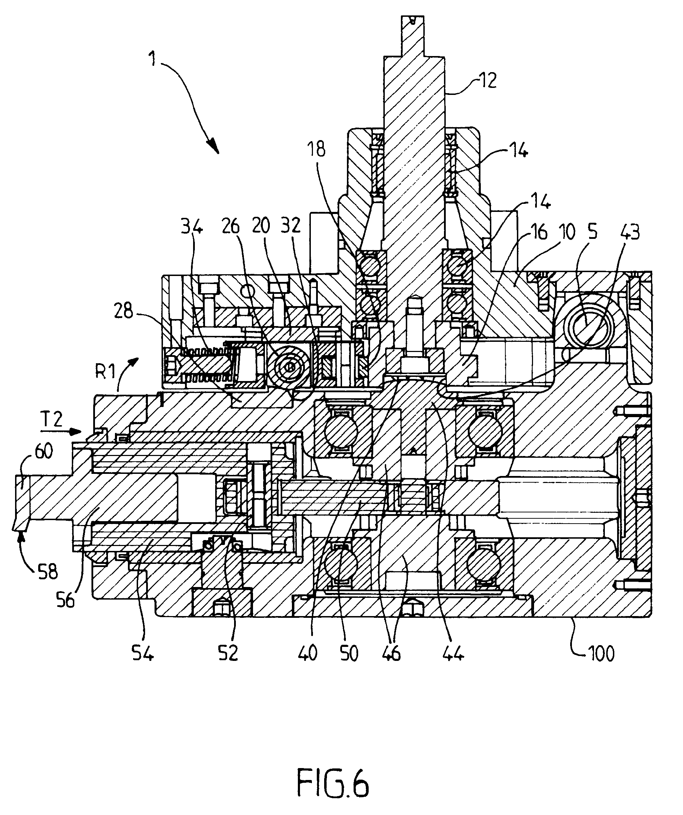

Or, en raison du déplacement du deuxième galet 26 et du fait que la rampe 28 est solidaire de la seconde partie de carter 100, cette dernière-ci pivote légèrement autour de l'axe 5 (flèche R1 de la figure 6) et rapproche les extrémités des deux parties de carter, comme cela est visible sur la figure 4.

Lorsque la came 16 continue de tourner avec l'arbre d'entrée 12, et que le « point bas » du profil extérieur de ladite came a été atteint, le premier galet 18 est repoussé par cette dernière et le mouvement inverse du coulisseau 20, puis du deuxième galet 26, est effectué, de sorte que ce dernier remonte la pente 32 pour arriver jusqu'au sommet de la protubérance 30 de la rampe 28. Cela a pour effet de faire pivoter la seconde partie de carter 100 dans le sens inverse (flèche R2) par rapport à la première partie de carter.

Simultanément à ces mouvements de translation et de rotation respectivement du galet 26 et de la seconde partie de carter 100, un autre mouvement est réalisé.

En effet, l'arbre d'entrée 12 est lié, par l'intermédiaire de l'accouplement à billes 40, au vilebrequin 46, lui-même relié à la bielle 50 qui est solidaire du coulisseau porte outil 54. A noter que l'accouplement à billes 40 permet de garantir la continuité de la liaison entre l'arbre d'entrée 12 et le vilebrequin 46 malgré la rotation (flèches R1 puis R2) simultanée de la seconde partie de carter 100 qui « incline » légèrement ledit arbre (débattement angulaire).

Ainsi, la rotation de l'arbre d'entrée 12 sur son axe XX' provoque la rotation de la rotule 44, qui fait tourner le vilebrequin 46. La rotation du vilebrequin 46 provoque, grâce au maneton 48, le déplacement linéaire alternatif de la bielle 50 qui déplace alors de la même façon le coulisseau porte outil 54 et donc la plaquette d'usinage 60.

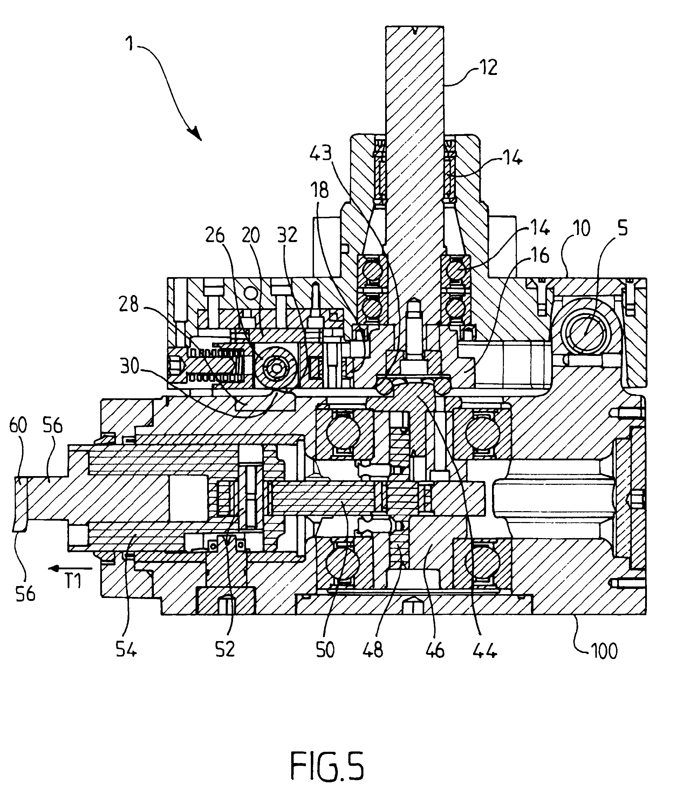

L'outil de mortaisage 60 effectue donc en premier lieu, à partir de sa position de repos (figure 4) un mouvement de translation (flèche T1 de la figure 5) et « plonge » de manière rectiligne dans la pièce à usiner pour retirer de la matière en formant une rainure rectiligne et créant des copeaux.

Lorsque l'arbre d'entrée 12 continue sa rotation, le vilebrequin 46 tourne également et « tire » la bielle 50 en sens contraire (flèche T2 de la figure 6), ce qui déplace le coulisseau porte outil 54 dans la même direction et le fait donc reculer dans la pièce en cours d'usinage. Simultanément à ce mouvement de retrait, la rotation de la came 16 provoque le déplacement du deuxième galet 26 le long de la rampe 28 et engendre la rotation (flèche R1) de la seconde partie de carter 100 autour de l'axe 5.

Cette rotation de la totalité de la seconde partie de carter 100 engendre à son tour la rotation du coulisseau porte outil 54, et donc celle de l'extrémité 58 de la plaquette 60 qui s'éloigne de la surface de la pièce en cours d'usinage (ce que l'on appelle la phase de montée de dégagement).

Comme le coulisseau porte outil 54 recule (flèche T2) en même temps qu'il pivote (flèche R1), l'extrémité de travail 58 de la plaquette 60 décrit une trajectoire courbe (voir « T2+R1 » sur la figure 1) et s'éloigne du point d'usinage de fond de course non seulement selon l'axe de pénétration de l'outil (c'est-à-dire l'axe de translation du coulisseau porte outil 54) mais également perpendiculairement à cette direction (c'est-à-dire vers le haut sur la figure 6 notamment, parallèlement à l'axe XX').

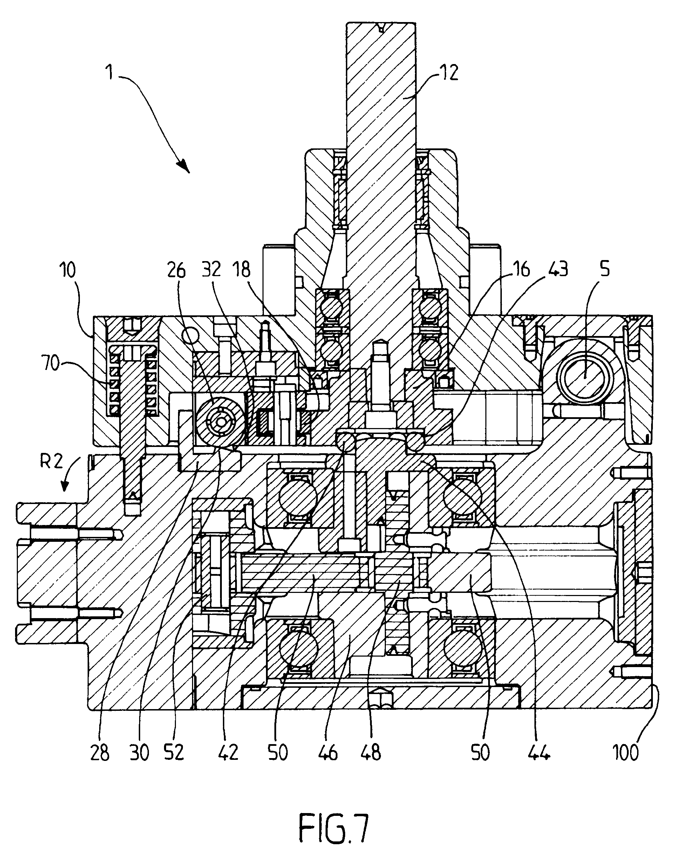

En poursuivant la rotation de l'arbre d'entrée 12, la plaquette 60 atteint un « point haut » de sa trajectoire parabolique (c'est-à-dire qu'elle est éloignée au maximum de la surface de la pièce) puis retourne au point de départ en suivant une autre courbe « descendante » (flèche R2 de la figure 7) au fur et à mesure que la seconde partie de carter 100 pivote dans le sens inverse par déplacement du deuxième galet 26 sur la rampe 28 en direction du sommet de la protubérance 30 (ce que l'on appelle la phase de retour en position de travail).

Ainsi, la synchronisation parfaite de la came 16 et du couple vilebrequin 46/maneton 48/bielle 50 permet dans un premier temps un mouvement parfaitement rectiligne du coulisseau porte outil 54, et donc un enlèvement de matière linéaire, puis un mouvement de retrait sensiblement en forme de parabole partant du point d'usinage en fond de course pour aller au point initial en passant par un « point haut » de ladite parabole où l'extrémité 58 de l'outil 60 est la plus éloignée de la surface de la pièce. On définit cette distance comme un dépincé qui mesure dans le cas présent quelques millimètres, par exemple de 0 à 2 millimètres.

Ceci permet donc à l'outil de mortaisage 60 de se dégager de manière optimisée de la surface usinée sans que la plaquette ne « racle » la pièce au cours de sa phase de retour au point initial en créant une « seconde passe » sur une zone déjà usinée. Ainsi, la qualité de l'usinage, en particulier l'aspect de surface et les tolérances de fabrication, est notablement améliorée. Ce retrait de l'outil permet aussi d'éviter la casse outil et travail. Enfin, l'outil de mortaisage est efficace jusqu'en fin de course, c'est-à-dire sur un demi tour complet de la came.

Des ressorts de rappel élastique 70 permettent d'accompagner les mouvements de pivotement de la seconde partie de carter 100 par rapport à la première partie de carter 10 et notamment le retour à la position initiale en repoussant la seconde partie de carter (flèche R2).

Une étanchéité complète est également prévue tout autour de la première partie de carter 10 à l'aide par exemple de joints plats.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, le coulisseau porte outil peut supporter plusieurs outils de mortaisage.

La course de l'outil de mortaisage peut être modifiée selon l'usinage souhaité en changeant la bielle et/ou le vilebrequin.

## Revendications

1. Unité de mortaisage (1) transformant un mouvement de rotation d'un arbre d'entrée (12) en un mouvement de translation alternatif d'un outil de mortaisage (60), comprenant :
- une première partie de carter (10) comportant au moins un arbre d'entrée rotatif (12),
- une seconde partie de carter (100) adjacente à la première partie comportant au moins un coulisseau (54) pour au moins un outil de mortaisage (60) muni d'une extrémité de travail (58),
- des moyens (40, 42, 43, 44, 46, 48, 50) pour transformer le mouvement de rotation de l'arbre d'entrée (12) en un mouvement de translation alternatif de l'outil de mortaisage (60) suivant un cycle d'avance pour retrait de matière, de remontée de dégagement, de recul et de redescente, avant de redémarrer un nouveau cycle, l'ensemble de la seconde partie de carter (100) étant monté oscillante par rapport à la première partie de carter (10) autour d'un axe de rotation (5) situé sur la première partie de carter (10) comportant l'arbre d'entrée (12), de sorte que, au moins lors de la phase de remontée de dégagement, ledit outil de mortaisage (60), en particulier l'extrémité de travail (58), pivote autour dudit axe (5),
où la première partie de carter (10) renferme des moyens de pivotement comportant :
- une came de pivotement (16) solidaire de l'arbre d'entrée (12) avec lequel elle tourne axialement,
**caractérisée en ce que** les moyens de pivotement comportent également:
- un coulisseau (20), prenant appui contre la came (16) par l'intermédiaire d'un premier galet (18),
- une glissière (24) recevant le coulisseau (20) pour le déplacement de ce dernier en translation perpendiculairement à l'arbre d'entrée (12),
- un deuxième galet (26) monté mobile en rotation à l'intérieur du coulisseau (20),
- une rampe (28) sur laquelle le deuxième galet (26) se déplace alternativement et de manière synchronisée avec le mouvement de rotation de la came (16), la rampe (28) comportant une protubérance (28) suivie, en direction de l'arbre d'entrée (12), d'une pente (32), de sorte que, lorsque le deuxième galet (26) est sur le sommet de la protubérance (30), l'outil de mortaisage (60) est dans sa position de travail ou de repos et, lorsque le deuxième galet (26) se déplace le long de la pente (32), la seconde partie de carter (100), et donc l'outil de mortaisage (60), pivote autour de l'axe (5), et
- un ressort de rappel (34) appuyant sur le coulisseau (20) pour ramener ce dernier contre la came (16).

2. Unité selon la revendication 1, **caractérisé en ce que** les moyens de pivotement comportent également des galets latéraux (36) de guidage disposés de part et d'autre du coulisseau (20) et reposant sur des pistes (38) solidaires de la première partie de carter (10).

3. Unité selon la revendication 1 ou la revendication 2, **caractérisée en ce que** l'axe de rotation (5) et les moyens de pivotement (16, 18, 20, 24, 26, 28) sont disposés de part et d'autre de l'arbre d'entrée (12), ledit axe de rotation (5) étant perpendiculaire audit arbre (12).

4. Unité selon la revendication 2 ou la revendication 3, **caractérisée en ce que** des ressorts de rappel élastique (70) sont prévus entre les deux parties de carter (10, 100) pour les ramener à leur position initiale après pivotement pour maintenir et pour maintenir le contact du deuxième galet (26) sur la rampe (28).

5. Unité selon l'une quelconque des revendications précédentes, **caractérisée en ce que** les moyens de transformation du mouvement de rotation de l'arbre d'entrée en mouvement de translation de l'outil de mortaisage comportent :
- une bielle (50) reliée au porte outil,
- un vilebrequin (46) relié à l'arbre d'entrée (12),
- un maneton (48) reliant la bielle (50) au vilebrequin (46), et
- un coulisseau porte outil (54) relié à la bielle (46).

6. Unité selon l'une quelconque des revendications 1 à 4 et 5, **caractérisée en ce que** la came de pivotement (28) et le vilebrequin (46) sont synchronisées.

7. Unité selon l'une quelconque des revendications précédentes, **caractérisée en ce que** la distance/hauteur de dégagement par rapport à la pièce usinée entre la position de travail et la position pivoté de l'outil de mortaisage, ou dépincé, est de l'ordre 0 à 2 mm à l'extrémité (58) de l'outil de mortaisage (60) .

8. Unité selon l'une quelconque des revendications précédentes, **caractérisée en ce que** l'accouplement (40) entre l'arbre d'entrée (12) et l'outil de mortaisage comporte un jeu de billes (42) monté dans une cage (43) entourant ledit arbre (12) et mobile en translation le long de l'axe (XX') afin de permettre un débattement axial et angulaire de quelques millimètres/degrés dudit arbre (12) lors de la rotation de l'outil de mortaisage (60).

9. Unité selon l'une quelconque des revendications précédentes, **caractérisé en ce que** des joints d'étanchéité sont prévus entre les première et seconde parties de carter (10).

## Patentansprüche

1. Stoßeinheit (1), die eine Drehbewegung einer Antriebswelle (12) in eine alternierende Translationsbewegung eines Stoßwerkzeugs (60) umwandelt, umfassend:
- einen ersten Gehäuseteil (10), der mindestens eine Drehantriebswelle (12) aufweist,
- einen zweiten, an den ersten Teil angrenzenden Gehäuseteil (100), der mindestens einen Schieber (54) für mindestens ein Stoßwerkzeug (60), das mit einem Arbeitsende (58) versehen ist, aufweist,
- Mittel (40, 42, 43, 44, 46, 48, 50) zum Umwandeln der Drehbewegung der Antriebswelle (12) in eine alternierende Translationsbewegung des Stoßwerkzeugs (60) gemäß einem Zyklus der Vorwärtsbewegung zum Abheben von Material, des erneuten Anhebens zur Freigabe, des Rückzugs und des erneuten Absenkens, bevor es einen neuen Zyklus beginnt,
wobei die Einheit des zweiten Gehäuseteils (100) relativ zu dem ersten Gehäuseteil (10) um eine Drehachse (5) herum schwingend gelagert ist, die auf dem ersten Gehäuseteil (10) angeordnet ist, der die Antriebswelle (12) aufweist, derart, dass, zumindest bei der Phase des erneuten Anhebens zur Freigabe das Stoßwerkzeug (60), insbesondere das Arbeitsende (58), um die Achse (5) herum verschwenkt,
wobei der erste Gehäuseteil (10) Schwenkmittel umfasst, die Folgendes aufweisen:
- -eine Schwenknocke (16), die mit der Antriebswelle (12) fest verbunden ist, mit der sie sich in axialer Richtung dreht,
**dadurch gekennzeichnet, dass** die Schwenkmittel auch Folgendes aufweisen:
- einen Schieber (20), der sich gegen die Nocke (16) mit Hilfe einer ersten Rolle (18) abstützt,
- eine Gleitschiene (24), die den Schieber (20) aufnimmt für die Bewegung dieses letzten in Translation senkrecht zu der Antriebswelle (12),
- eine zweite Rolle (26), die im Inneren des Schiebers (20) drehbar gelagert ist,
- eine Rampe (28), auf der sich die zweite Rolle (26) alternierend und mit der Drehbewegung der Nocke (16) synchronisiert bewegt, wobei die Rampe (28) eine Ausstülpung (30) aufweist, der, in Richtung der Antriebswelle (12), ein Gefälle (32) folgt, derart, dass, wenn die zweite Rolle (26) auf der Spitze der Ausstülpung (30) ist, das Stoßwerkzeug (60) in seiner Arbeitsstellung ist, und, wenn sich die zweite Rolle (26) entlang des Gefälles (32) bewegt, der zweite Gehäuseteil (100), und somit das Stoßwerkzeug (60), um die Achse (5) herum verschwenkt, und
- eine Rückstellfeder (34), die sich auf dem Schieber (20) abstützt, um diesen letzten gegen die Nocke (16) zurückzustellen.

2. Einheit nach Anspruch 1, **dadurch gekennzeichnet, dass** die Schwenkmittel auch seitliche Führungsrollen (36) aufweisen, die beiderseits des Schiebers (20) angeordnet sind und auf Bahnen aufliegen (38), die mit dem ersten Gehäuseteil (10) fest verbunden sind.

3. Einheit nach Anspruch 1 oder Anspruch 2, **dadurch gekennzeichnet, dass** die Drehachse (5) und die Schwenkmittel (16, 18, 20, 24, 26, 28) beiderseits der Antriebswelle (12) angeordnet sind, wobei die Drehachse (5) senkrecht zu der Welle (12) ist.

4. Einheit nach Anspruch 2 oder Anspruch 3, **dadurch gekennzeichnet, dass** elastische Rückstellfedern (70) zwischen den zwei Gehäuseteilen (10, 100) vorgesehen sind, um sie nach Verschwenkung in ihre Ausgangsposition zurückzustellen und um den Kontakt der zweiten Rolle (26) auf der Rampe (28) aufrechtzuerhalten.

5. Einheit nach einem der vorhergehenden Ansprüche, **dadurch gekennzeichnet, dass** die Mittel zum Umwandeln der Drehbewegung der Antriebswelle in eine Translationsbewegung des Stoßwerkzeugs Folgendes aufweisen:
- eine Gelenkstange (50), die mit einem Werkzeughalter verbunden ist,
- eine Kurbelwelle (46), die mit der Antriebswelle (12) verbunden ist,
- einen Kurbelzapfen (48) für die Verbindung der Gelenkstange (50) mit der Kurbelwelle (46) und
- einen Werkzeughalter-Schieber (54), der mit der Gelenkstange (50) verbunden ist.

6. Einheit nach einem der Ansprüche 1 bis 4 und 5, **dadurch gekennzeichnet, dass** die Schwenknocke (16) und die Kurbelwelle (46) synchronisiert sind.

7. Einheit nach einem der vorhergehenden Ansprüche, **dadurch gekennzeichnet, dass** der Freigabeabstand/die Freigabehöhe relativ zu dem bearbeiteten Teil zwischen der Arbeitsstellung und der verschwenkten Stellung des Stoßwerkzeugs, oder Lüftung, in der Größenordnung von 0 bis 2 mm an dem Ende (58) des Stoßwerkzeugs (60) ist.

8. Einheit nach einem der vorhergehenden Ansprüche, **dadurch gekennzeichnet, dass** die Kupplung (40) zwischen der Antriebswelle (12) und dem Stoßwerkzeug (60) ein Kugelspiel (42) aufweist, das in einem Käfig (43) gelagert ist, der die Welle (12) umgibt und entlang der Achse (XX') in Translation beweglich ist, um einen Axialund Winkelausschlag von einigen Millimetern/Graden der Welle (12) bei der Drehung des Stoßwerkzeugs (60) zu ermöglichen.

9. Einheit nach einem der vorhergehenden Ansprüche, **dadurch gekennzeichnet, dass** Dichtungselemente zwischen dem ersten und dem zweiten Gehäuseteil (10, 100) vorgesehen sind.

## Claims

1. A mortising unit (1) converting a rotational movement of an input shaft (12) into a reciprocating translational movement of a mortising tool (60), comprising:
- a first casing portion (10) including at least one rotating input shaft (12),
- a second casing portion (100) adjacent to the first portion including at least one slide (54) for at least one mortising tool (60) provided with a working end (58),
- means (40, 42, 43, 44, 46, 48, 50) for converting the rotational movement of the input shaft (12) into a reciprocating translational movement of the slotting tool (60) in a cycle consisting of feed movement for the removal of material, upward withdrawal movement, return movement and downward movement, before restarting a new cycle,
the entirety of the second casing portion (100) being mounted to oscillate relative to the first casing portion (10) about an axis of rotation (5) situated on the first casing portion (10) including the input shaft (12), such that, at least during the upward withdrawal movement phase, the said slotting tool (60), in particular the working end (58), pivots about the said axis (5),
wherein the first casing portion (10) encloses pivoting means including:
- a pivoting cam (16) integral with the input shaft (12) with which it rotates axially,
**characterised in that** the pivoting means also include:
- a slide (20) bearing against the cam (16) by means of a first roller (18),
- a guideway (24) receiving the slide (20) for displacement of the latter in translation perpendicularly to the input shaft (12),
- a second roller (26) mounted to move in rotation inside the slide (20),
- a ramp (28) on which the second roller (26) is displaced in a reciprocating manner in synchronisation with the rotational movement of the cam (16), the ramp (28) including a protuberance (30) followed in the direction of the input shaft (12) by a slope (32), such that, when the second roller (26) is at the top of the protuberance (30), the mortising tool (60) is in its working position or idle position and, when the second roller (26) is displaced along the slope (32), the second casing portion (100), and therefore the slotting tool (60), pivots about the axis (5), and
- a return spring (34) pressing on the slide (20) in order to bring the latter back to bear against the cam (16).

2. A unit according to claim 1, **characterised in that** the pivoting means also include lateral guide rollers (36) disposed on either side of the slide (20) and resting on tracks (38) integral with the first casing portion (10).

3. A unit according to claim 1 or claim 2, **characterised in that** the axis of rotation (5) and the pivoting means (16, 18, 20, 24, 26, 28) are disposed on either side of the input shaft (12), the said axis of rotation (5) being perpendicular to the said shaft (12).

4. A unit according to claim 2 or claim 3, **characterised in that** elastic return springs (70) are provided between the two casing portions (10, 100) in order to return them to their initial positions after pivoting in order to maintain the contact of the second roller (26) with the ramp (28).

5. A unit according to any one of the preceding claims, **characterised in that** the means for converting the rotational movement of the input shaft into translational movement of the mortising tool include:
- a connecting rod (50) connected to a tool holder,
- a crankshaft (46) connected to the input shaft (12),
- a crank pin (48) connecting the connecting rod (50) to the crankshaft (46), and
- a tool holder (54) connected to the connecting rod (50).

6. A unit according to any one of claims 1 to 4 and 5, **characterised in that** the pivoting cam (16) and the crankshaft (46) are synchronised.

7. A unit according to any one of the preceding claims, **characterised in that** the withdrawal distance/height relative to the machined workpiece between the working position and the pivoted position of the mortising tool, or clearance, is of the order of 0 to 2 mm at the end (58) of the mortising tool (60).

8. A unit according to any one of the preceding claims, **characterised in that** the coupling (40) between the input shaft (12) and the mortising tool includes a ballset (42) mounted in a cage (43) surrounding the said shaft (12) and movable in translation along the axis (XX') in order to allow for a few millimetres/degrees of axial and angular clearance of the said shaft (12) during the rotation of the mortising tool (60).

9. A unit according to any one of the preceding claims, **characterised in that** seals are provided between the first and second casing portions (10, 100).
